# EUROPÄISCHE PATENTSCHRIFT

(11) **EP 1 060 014 B1**
(45) Veröffentlichungstag und Bekanntmachung des Hinweises auf die Patenterteilung: **03.07.2002**
(21) Anmeldenummer: 99911729.4
(22) Anmeldetag: 03.03.1999
(51) Int. Cl.: B01J 19/00

(54) **VERFAHREN ZUR DURCHFÜHRUNG CHEMISCHER UMSETZUNGEN IN EINEM MIKROREAKTOR UND SOLCH EIN MIKROREAKTOR**
METHOD FOR CARRYING OUT CHEMICAL REACTIONS IN A MICROREACTOR, AND SUCH A MICROREACTOR
PROCEDE POUR LA REALISATION DE TRANSFORMATIONS CHIMIQUES DANS UN MICROREACTEUR, ET UN TEL MICROREACTEUR

(30) Priorität: 04.03.1998 DE 19809139
(43) Veröffentlichungstag der Anmeldung: 20.12.2000
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); LÖWE, Holger, D-55276 Oppenheim (DE); HESSEL, Volker, D-65510 Hünstetten-Wallbach (DE)
(74) Vertreter: Weber, Roland, Dipl.-Chem.
(86) Internationale Anmeldenummer: EP9901361
(87) Internationale Veröffentlichungsnummer: WO9944736

(56) Entgegenhaltungen:
- EP-A- 0 347 579
- WO-A-94/17288
- DE-A- 2 016 614

## Beschreibung

Die Erfindung betrifft ein Verfahren zur Durchführung chemischer Umsetzungen in einem Mikroreaktor, bei dem ein oder mehrere Eduktströme zu mindestens einem Reaktionsbereich geführt werden, und bei dem ein oder mehrere Produktströme vom Reaktionsbereich im Gegenstrom zu dem bzw. den Eduktströmen und in thermischem Kontakt mit diesem bzw. diesen geführt werden. Des weiteren betrifft die Erfindung einen Mikroreaktor zur Durchführung chemischer Umsetzungen mit einer oder mehreren Zuführungen für Edukte und einer oder mehreren Abführungen für Produkte sowie mindestens einem mit der bzw. den Zu- und Abführungen verbundenen Reaktionsbereich, wobei die Abführungen im Gegenstrom zu der bzw. den Zuführungen und in thermischem Kontakt mit dieser bzw. diesen angeordnet sind

Mikroreaktoren ermöglichen aufgrund des hohen Oberflächen-zu-Volumen-Verhältnisses eine exakte und schnelle Einstellung von Reaktionsbedingungen und damit eine Optimierung der Ausbeute und der Selektivität. Da je Reaktionsbereich nur kleine Mengen umgesetzt werden, lassen sich auch Reaktionen mit explosiven oder/ und toxischen Substanzen ohne umfangreiche Sicherheitsvorkehrungen durchführen. Dies ermöglicht zum Beispiel eine Vorort-Produktion kleiner Mengen, insbesondere von Substanzen, deren großtechnische Produktion oder/ und Transport nicht praktikabel sind.

Aus der DE 39 26 466 A1 ist ein Mikroreaktor zur Durchführung chemischer Reaktionen mit starker Wärmetönung bekannt, in dem Stoff-, Reaktions- und Wärmeführung in übereinandergeschichteten, plattenartigen Elementen stattfindet, die durch ein System aus durch Zerspanung hergestellten Rillen durchzogen und verbunden sind. Der Mikroreaktor selbst kann aus einem Katalysatormaterial gefertigt sein.

In der WO 95/30476 wird ein Verfahren zur Durchführung chemischer Reaktionen vorgestellt. Dadurch, daß die Edukte in Fluidfäden aufgeteilt werden, gelangen die Edukte eng benachbart als Freistrahlen in einen Raum, der als Misch- und Reaktionsraum dient, wo sie durch Diffusion und Turbulenz vermischen und zur Reaktion kommen. Der Vorteil hierbei ist, daß durch die Aufteilung in Fluidfäden die Edukte schnell homogen vermischt werden, wodurch eine Reaktion mit weniger Folge- und Nebenprodukten stattfindet. Eine Durchführung heterogen katalysierter Gasphasenreaktionen ist nach diesem Verfahren nicht ohne weiteres möglich.

Entscheidender Nachteil bekannter Mikroreaktoren ist, daß aufgrund des hohen Oberflächen-zu-Volumen-Verhältnisses, das eine gezielte und schnelle Einstellung der Reaktionsbedingungen ermöglicht, ein hoher Wärmeverlust auftritt. insbesondere bei Reaktionen, die bei erhöhten Temperaturen ablaufen, erfordert dies eine ständige Zufuhr größerer Wärmemengen, um die Wärmeverluste über das Mikroreaktorgehäuse sowie über den den Reaktor verlassenden Produktstrom auszugleichen.

Großtechnisch tritt dieses Problem dadurch kaum in Erscheinung, daß der eigentliche Reaktionsbereich thermisch einfach zu isolieren ist und die Reaktionswärme aus dem Produktstrom über Wärmetauscher einfach zurückzugewinnen ist. Solche mehrstufigen Konzepte lassen sich jedoch nicht ohne weiteres auf Mikroreaktoren übertragen und würden zudem den Vorteil kompakter Anordnungen zunichte machen.

Ein solcher großtechnischer Reaktor zur Durchführung exothermer katalytischer Oxidationsreaktionen bei möglichst isothermen Bedingungen wird in der DE-OS-2 016 614 beschrieben. in dem zylindrischen Reaktor wird axial über eine zentrale Gaszuführung das umzusetzende Gasgemisch zugeführt und radial in mit Katalysator-Material gefüllte Kreisringsektoren weitergeleitet. Die Umsetzung findet in den Kreisringsektoren statt, wobei alternierende Kreisringsektoren als Plattenwärmetauscher ausgebildet sind, die in axialer Richtung von einer Kühlflüssigkeit durchströmt werden. Die von der Kühlflüssigkeit aufgenommene Reaktionswärme kann zur Erzielung einer erforderlichen Anfangstemperatur beispielsweise über einen weiteren Wärmetauscher an das umzusetzende Gasgemisch abgegeben werden. Die Reaktionsprodukte, die radial aus den Kreisringsektoren ausströmen, werden über einen als Sammler ausgebildeten, die Kreisringsektoren umgebenden Ringraum zusammengeführt. Dieses mindestens einen Wärmetauscher beinhaltende Konzept würde jedoch bei Übertragung auf Mikroreaktormaßstäbe aufgrund des komplexen Aufbaus zu hohen Wärmeverlusten führen.

In der US 5,405,586 wird ebenfalls ein zylindrischer Reaktor mit Kreisringsektoren als Reaktionsbereiche und Wärmetauscher vorgestellt. Jeder zweite Kreisringsektor weist ein katalytisch aktives Material auf, das radial von außen nach innen durchströmt wird, wobei die Edukte axial von oben zugeführt und die Produkte axial nach unten abgeführt werden. Alternierende Kreisringsektoren werden von einem Wärmetauscher-Medium radial von innen nach außen durchströmt, so daß sich die Temperatur der katalysatorgefüllten Reaktionsbereiche genau einstellen läßt.

Ein weiterer großtechnischer Reaktor zur Durchführung katalytischer Reaktionen, bei dem die Reaktionsbereiche in engem Kontakt mit einem Wärmetauscher stehen, ist in der DE-PS-942 805 beschrieben. Zwischen den Windungen eines Spiralwärmetauschers befindet sich katalytisch aktives Material, das quer zu dem spiralförmig strömenden Wärmetauscher-Medium durchströmt wird.

Ein ähnlicher Reaktor wird in dem Abstract zur JP 3-26326 beschrieben. Die umzusetzenden Gase werden in einer spiralartig gewundenen katalytischen Schicht von innen nach außen geführt, während in den ebenfalls spiralartig gewundenen Zwischenräumen ein Heizmedium zunächst axial zugeführt und dann spiralartig nach außen geleitet wird.

In dem Abstract zur JP 61-118132 wird ein zylindrischer Reaktor beschrieben, in dem ein zwischen spiralartig gewundenen Platten befindliches katalytisches Material axial zur Spiralachse durchströmt wird. In den ebenfalls spiralartig verlaufenden Zwischenräumen der spiralartig gewundenen Platten strömt quer zum Eduktstrom ein Wärmetauscher-Medium. Auch hier befinden sich die Reaktionsbereiche in direktem Kontakt mit einem Wärmetauscher.

In der DE-PS-214788 wird ein geschlossener Spiralgegenstromkühler zum Wärmetausch zwischen zwei voneinander getrennten Fluiden vorgestellt. Ein Einsatz als Reaktor ist nicht vorgesehen.

Solche großtechnischen Reaktoren sind auf die Möglichkeit einer gezielt einstellbaren isothermen Reaktionsführung hin optimiert. Eine Minimierung von Wärmeverlusten der Reaktionsbereiche direkt an die Umgebung oder indirekt über die abgeführten Produkte wird jedoch nicht angestrebt. Aufgrund der mit den geänderten Oberflächen-zu-Volumen-Verhältnissen einhergehenden Wärmerverlusten ist eine Übertragung solcher Reaktorkonzepte auf Maßstäbe von Mikroreaktoren kaum sinnvoll.

Ein Röhrenofen zum indirekten Erhitzen von Gasen oder Flüssigkeiten wird in der AT-PS-235 802 beschrieben. Das Fluid wird durch Gegenstromrohre, d. h. ineinandergeschobene Doppelrohre, geleitet, die parallel zueinander ausgerichtet in einen Feuerraum hineinragen. Die Rohre können eine Katalysatorfüllung aufweisen. Mit dieser Anordnung kann ein guter Wärmeübergang vom Feuerraum zu dem Gegenstromrohren erreicht werden. Eine Minimierung von Wärmeverlusten der Reaktionsbereiche in den Gegenstromrohren an die Umgebung kann hiermit jedoch nicht erreicht werden.

In der GB-PS-1,122,426 wird ein Verfahren zur Durchführung insbesondere von Gasphasenreaktionen bei gleichzeitiger Vermeidung von Nebenreaktionen durch Begrenzung der Temperatur der Wände des Reaktionsbereiches vorgestellt. Der Eduktstrom wird zu einem Reaktionsbereich geführt, wobei der Produktstrom auf der Länge des Reaktionsbereiches im Gegenstrom zum Eduktstrom und in thermischen Kontakt mit diesem abgeführt wird. Hierdurch wird eine ständige Wärmeabfuhr erreicht, so daß die Wände des Reaktionsbereiches nicht solch eine Temperatur annehmen, die eine unerwünschte katalytische Aktivität bewirkt. Eine gute Wärmeübertragung aus dem Produktstrom an den Eduktstrom wird aufgrund der kleinen Länge und der Anordnung des Gegenstrombereichs nicht erreicht. Vielmehr werden aufgrund der Führung des aufgeheizten Eduktstromes und des Produktstromes in weiten Bereichen in Kontakt mit der Umgebung hohe Wärmeverluste bewirkt.

Der Erfindung liegt daher die Aufgabe zugrunde, ein Verfahren zur Durchführung chemischer Umsetzungen in einem Mikroreaktor sowie einen entsprechenden Mikroreaktor der eingangs erwähnten Art bereitzustellen, bei dem Wärmeverluste aus dem Reaktionsbereich an die Umgebung stark vermindert sind und bei dem weiterhin eine kompakte Anordnung möglich ist.

Die Aufgabe wird durch Verfahren gemäß Anspruch 1 und durch einen Mikroreaktor gemäß Anspruch 7 gelöst, wobei die abhängigen Ansprüche vorteilhafte Ausgestaltungen der Erfindung betreffen.

Gemäß des erfindungsgemäßen Verfahrens wird der Edukt- und Produktstrom bzw, die Edukt- und Produktströme zur Minimierung thermischer Verluste aus dem Reaktionsbereich an die Umgebung spiralartig oder radial in mindestens einer Ebene zu bzw. von einem Reaktionsbereich geführt, der in einem zentralen Bereich des Mikroreaktors angeordnet ist.

Durch die Führung des Produktstroms im Gegenstrom und in thermischem Kontakt zum Edukstrom wird eine Rückgewinnung der in dem Produktstrom enthaltenen Reaktionswärme erreicht. Erfindungsgemäß wird jedoch auch eine Minimierung der Wärmeverluste des Reaktionsbereiches an die Umgebung erreicht, die gerade bei Mikroreaktoren über das Gehäuse aufgrund des großen Oberflächen-zu-Volumen-Verhältnisses sehr hoch sind. Hierzu ist der Reaktionsbereich in einem zentralen Bereich des Mikroreaktors angeordnet und in mindestens einer Ebene spiralartig oder radial von dem bzw. den Edukt- und Produktströmen umgeben. Freiwerdende Reaktionswärme wird also über die einströmenden Edukte wieder dem Reaktionsbereich zugeführt oder an den Produktstrom abgegeben, der durch die Gegenstromführung die Reaktionswärme wieder dem Eduktstrom zuführt. Die Verluste aus dem Reaktionsbereich an die Umgebung durch Wärmeleitung oder Wärmestrahlung, insbesondere über das Gehäuse, werden somit minimal gehalten. Das erfindungsgemäße Verfahren läßt sich auch vorteilhaft für Flüssigphasen-Reaktionen einsetzen.

Durch die Minimierung der Wärmeverluste kann im Reaktionsbereich eine für bekannte Mikroreaktoren nicht ohne weiteres erreichbare hohe Temperatur erzielt werden, so daß dieses Verfahren den Einsatzbereich von Mikroreaktoren entscheidend erweitert. Daher können mit diesem Verfahren die mit dem Einsatz von Mikroreaktoren verbundenen Vorteile, wie Steigerung der Selektivität und der Ausbeute, auf ein neues Spektrum von chemischen Umsetzungen erweitert werden. Die Erfindung eignet sich daher insbesondere zur Durchführung von Gasphasenreaktionen bei erhöhten Temperaturen, bevorzugt bei Temperaturen über 500 °C.

Ein aufwendiges Kühlen der Produkte bzw. Aufheizen der Edukte kann nach diesem Verfahren entfallen, wodurch auch eine deutliche Energieeinsparung erreicht wird. Zum Ausgleich von restlichen Wärmeverlusten kann dennoch ein Vorheizen des Eduktstroms vorgesehen werden.

Liegen mehrere Reaktionsbereiche vor, so sind diese benachbart, und von den Zu- und Abführungen umgeben. Diese benachbarte Anordnung der Reaktionsbereiche erlaubt eine Homogenisierung der Reaktionstemperaturen sowie bei Verwendung von Katalysatoren eine Homogenisierung der Katalysatortemperaturen. Hierdurch können die Umsetzungen in dem Mikroreaktor unter einheitlichen Bedingungen durchgeführt werden. Darüber hinaus gestattet die Anordnung von Zuführung, Abführung und Reaktionsbereich eine kompakte Bauweise bei einem einfachen Aufbau, so daß eine kostengünstige Realisierung in großen Stückzahlen ermöglicht wird.

Nach einer ersten Ausführungsform des Verfahrens wird ein Edukt- und Produktstrom spiralartig in einer Ebene zu bzw. von einem an der gemeinsamen Spiralachse angeordneten Reaktionsbereich geführt. Zur Vermeidung von Wärmeverlusten in Richtung ober- und unterhalb der Spiralebene weisen der Edukt- und Produktstrom vorteilhaft ein hohes Aspektverhältnis, d. h. Verhältnis von Höhe zu Breite auf, oder/ und mehrere Edukt- und Produktströme werden in übereinanderliegenden Ebenen spiralartig geführt. Es ist auch denkbar, zwei oder mehr Edukt- oder/ und Produktströme spiralartig in einer Ebene zu führen. Ebenso können auch zwei oder mehr, gegebenenfalls hintereinander angeordnete Reaktionsbereiche vorgesehen werden.

Nach einer zweiten Ausführungsform werden mehrere Edukt- und Produktströme jeweils in alternierenden Sektoren eines einen zylindrischen zentralen Bereich umgebenden, im Querschnitt kreisringförmigen Raumes radial zu bzw. von dem zentralen Bereich geführt, wobei der zentrale Bereich und/ oder Bereich der Sektoren als Reaktionsbereich dient bzw. dienen. Hierbei ist der Reaktionsbereich also in mindestens einer Ebene radial von den Edukt-und Produktströmen umgeben, die in den Sektoren im Gegenstrom zueinander geführt werden.

Gemäß einer dritten Ausführungsform werden mehrere Edukt- und Produktströme radial zu bzw. von mehreren Reaktionsbereichen geführt, die fluidisch voneinander getrennt sowie in einem zentralen Bereich des Mikroreaktors und benachbart zueinander liegen. Jeweils mindestens ein Edukt- und Produktstrom werden in einer Gegenstrom-Reaktoreinheit in thermischem Kontakt miteinander und im Gegenstrom zueinander geführt, wobei die Gegenstrom-Reaktoreinheit jeweils mindestens einen Reaktionsbereich aufweist. Die Gegenstrom-Reaktoreinheiten sind also in mindestens einer Ebene benachbart und zu einem zentralen Bereich hin ausgerichtet, so daß auch die Reaktionsbereiche benachbart zueinander liegen. Die Edukt- und Produktströme verlaufen radial in Richtung des zentralen Bereiches. Die von einem Reaktionsbereich abgegebene Wärme wird daher in dieser Ebene an die Edukt- und Produktströme sowie an die übrigen Reaktionsbereiche abgegeben, so daß eine Homogenisierung der Temperaturen der Reaktionsbereiche und damit eine einheitliche Reaktionsführung in den Gegenstrom-Reaktoreinheiten erreicht wird.

Es kann vorteilhaft sein, um die Gegenstrom-Reaktoreinheiten ein Wärmetausch-Medium zu leiten. Hierzu können die zwischen den Gegenstrom-Reaktoreinheiten befindlichen Zwischenräume genutzt werden.

Zum Aufteilen eines Eduktstroms und zum Zusammenführen einzelner Produktströme werden die Eduktströme und/ oder die Produktströme über einen äußeren kreisringförmigen Raum zu- bzw. abgeführt. Hierdurch wird auch ein weiterer Wärmetausch zwischen den Edukt- und Produktströmen erreicht.

Um eine gute Wärmeübertragung zu gewährleisten, werden die Edukt- und/oder Produktströme vorteilhaft in Kanälen mit einer Breite in mindestens einem Bereich von < 2 mm geführt. Mit mikrotechnischen Herstellungsverfahren lassen sich auch kleinste Kanalbreiten von 500 µm und kleiner realisieren, wodurch auch bei kleinen Weglängen und/ oder hohen Strömungsgeschwindigkeiten eine sehr gute Wärmeübertragung zwischen dem Produkt- und Eduktstrom erreichen wird. Ein weiterer Vorteil kleiner Kanalbreiten ist das Vorherrschen laminarer Strömungsbedingungen, die im Gegensatz zu sonst in Reaktoren üblichen turbulenten Bedingungen eine genaue Einstellung der Verweilzeiten und damit eine Erhöhung sowohl der Selektivität als auch der Ausbeute ermöglichen.

Der erfindungsgemäße Mikroreaktor zeichnet sich dadurch aus, daß die Zuführung und Abführung bzw. die Zuführungen und Abführungen spiralartig oder radial in mindestens einer Ebene um den in einem zentralen Bereich des Mikroreaktors liegenden Reaktionsbereich angeordnet sind. Dadurch, daß der Reaktionsbereich in mindestens einer Ebene von der bzw. den Zuführungen und Abführungen umgeben ist, wird eine Minimierung thermischer Verluste aus dem Reaktionsbereich an die Umgebung erzielt.

Zur Minimierung von Wärmeverlusten senkrecht zu der Ebene, in der der Reaktionsbereich von den Zu- und Abführungen umgeben ist, weisen die Zu- und Abführungen vorteilhaft ein hohes Aspektverhältnis, d. h. Verhältnis von Höhe zu Breite auf, oder/ und mehrere solcher Mikroreaktoren sind derart übereinander angeordnet, daß die Reaktionsbereiche benachbart zueinander liegen.

Gemäß einer ersten Ausführungsform des Mikroreaktors verlaufen die Zuführung und Abführung spiralartig um eine gemeinsame Spiralachse, wobei der Reaktionsbereich an einem Bereich an der gemeinsamen Spiralachse angeordnet ist. Zum Einleiten von zwei oder mehr Edukten können auch zwei oder mehr Zuführungen vorgesehen sein. Ebenfalls vorteilhaft können auch zwei oder mehr, gegebenenfalls hintereinander angeordnete Reaktionsbereiche vorhanden sein.

Nach einer zweiten Ausführungsform weist der Mikroreaktor einen zylindrischen zentralen Bereich auf, der von einem in Sektoren aufgeteilten und im Querschnitt kreisringförmigen Raum umgeben ist. Alternierende Sektoren des kreisringförmigen Raumes dienen als Zu- bzw. Abführung. Der zentrale Bereich und/ oder Bereiche der Sektoren dient bzw. dienen als Reaktionsbereich. Die als Zuführung dienenden Sektoren sind über den zentralen Bereich jeweils mit den als Abführung dienenden Sektoren verbunden. Hierzu kann der zylindrische zentrale Bereich einfach als freier Raum, in den die Sektoren münden, ausgestaltet sein oder der zentrale Bereich ist derart unterteilt, daß jeweils nur ein Sektor mit seinem benachbarten Sektor verbunden ist.

Gemäß einer dritten Ausführungsform sind mehrere Zu- und Abführungen radial in mindestens einer Ebene um mehrere Reaktionsbereiche angeordnet, die fluidisch voneinander getrennt sind und in einem zentralen Bereich des Mikroreaktors benachbart zueinander liegen. Jeweils mindestens eine Zuführung und Abführung sowie mindestens ein Reaktionsbereich sind in einer Gegenstrom-Reaktoreinheit enthalten.

Die Gegenstrom-Reaktoreinheiten liegen also in mindestens einer Ebene benachbart zueinander und sind derart zu dem zentralen Bereich hin ausgerichtet, daß die Reaktionsbereiche benachbart zueinander liegen und die Zu- und Abführungen radial um die Reaktionsbereiche angeordnet sind.

Gemäß einer Ausführungsvariante weisen die Gegenstrom-Reaktoreinheiten jeweils ein Gegenstromrohr auf, das ein äußeres an einem Ende verschlossenes Rohr und ein koaxial zum äußeren Rohr beabstandetes inneres Rohr umfaßt. Das innere Rohr dient als Zu- oder Abführung und der Bereich zwischen dem äußeren und dem inneren Rohr dient umgekehrt als Ab- bzw. Zuführung. Der Übergangsbereich zwischen der Zu- und der Abführung im Bereich des verschlossenen Endes des äußeren Rohres dient als Reaktionsbereich. Diese Gegenstromrohre sind derart radial um einen zentralen Bereich angeordnet, daß die Reaktionsbereiche benachbart zueinander liegen und zum zentralen Bereich hin ausgerichtet sind.

Zur Minimierung von Wärmeverlusten senkrecht zur Ebene der Gegenstrom-Reaktoreinheiten sind vorteilhaft zwei oder mehr übereinander liegende Ebenen mit Gegenstrom-Reaktoreinheiten vorgesehen, die jeweils in einer Ebene radial um einen gemeinsamen zylindrischen zentralen Bereich angeordnet sind. Solch eine Anordnung ist technisch eintach zu realisieren.

Es ist auch denkbar, die Gegenstrom-Reaktoreinheiten radial im Raum um einen kugelförmigen zentralen Bereich anzuordnen. Durch solch eine, beispielsweise kugelsymmetrische Anordnung, sind direkte Wärmeverluste der Reaktionsbereiche an die Umgebung weitgehend unterbunden.

Gemäß einer weiteren Ausführungsvariante weisen die Gegenstrom-Reaktoreinheiten jeweils zwei zueinander beabstandet angeordnete plattenförmige Elemente, die einen als Zu- oder Abführung dienenden Kanal bilden, sowie ein die beiden plattenförmigen Elemente U-förmig umgebendes plattenförmiges Element, das mit den ersten beiden plattenförmigen Elementen jeweils einen als Ab- bzw. Zuführung dienenden Kanal bildet. Der Übergangsbereich zwischen der Zu- und der Abführung im Bereich der Biegung des U-förmigen Elementes dient als Reaktionsbereich.

Diese Gegenstrom-Reaktoreinheiten ermöglicht aufgrund der fast beliebigen Ausdehnung der plattenförmigen Elemente sehr hohe Aspektverhältnisse und damit sehr gute Wärmeaustauschbedingungen bei sehr kleinen Wärmeverlusten an die Umgebung.

Dieser Mikroreaktor weist durch die Verwendung von zum Teil gebogenen plattenförmigen Elementen einen einfachen Aufbau auf und kann damit kostengünstig hergestellt werden. Insbesondere die U-förmigen plattenförmigen Elemente der einzelnen Gegenstrom-Reaktoreinheiten können, da sie aneinandergrenzen, aus einem einzigen Stück gefertigt sein.

Die Gegenstrom-Reaktoreinheiten gemäß einer der Ausführungsvarianten können aneinander grenzen, um eine Homogenisierung der Temperatur der Reaktionsbereiche durch Wärmeleitung zu erreichen. Befinden sich zwischen den Gegenstrom-Reaktoreinheiten Zwischenräume, so können diese zum Durchleiten eines Wärmetausch-Mediums genutzt werden.

Vorteilhaft sind die Sektoren nach der zweiten Ausführungsform oder die Gegenstrom-Reaktoreinheiten nach der dritten Ausführungsform von einem als Abführungssammler oder Zuführungsverteiler dienenden äußeren im Querschnitt kreisringförmigen Raum umgeben, der mit den Abführungen bzw. den Zuführungen in radialer Richtung verbunden ist. Dies ermöglicht einen verbesserten Wärmetausch bei gleichzeitig kompakter Bauweise.

Dieser als Abführungssammler oder Zuführungsverteiler dienende kreisringförmige Raum kann von einem zweiten äußeren im Querschnitt kreisringförmigen Raum umgeben sein, der umgekehrt als Zuführungsverteiler bzw. Abführungssammler dient und hierzu mit den Zuführungen bzw. den Abführungen in radialer Richtung verbunden ist.

Eine Hauptabführung oder Hauptzuführung kann oberhalb oder/ und unterhalb des in Sektoren aufgeteilten kreisringförmigen Raumes oder/ und des ersten oder/ und zweiten äußeren kreisringförmigen Raumes vorgesehen sein. Diese Hauptzuführung oder Hauptabführung ist hierzu mit den als Abführung bzw. Zuführung dienenden Sektoren bzw. dem Abführungssammler bzw. dem Zuführungsverteiler in axialer Richtung verbunden. Neben des äußerst kompakten Aufbaus werden mit dieser Anordnung Wärmeverluste senkrecht zur Ebene, in der die Zu- und Abführungen angeordnet sind, minimiert.

Vorteilhaft sind die Zu- und/ oder Abführungen zur guten Wärmeübertragung als Kanäle mit einer Breite in mindestens einem Bereich von < 2 mm ausgebildet. Bevorzugt sind Kanalbreiten von kleiner gleich 500 um, wodurch auch bei kleinen Weglängen und/ oder hohen Strömungsgeschwindigkeiten eine sehr gute Wärmeübertragung zwischen dem Produkt- und Eduktstrom erreicht wird. Besonders bevorzugt sind die Kanalbreiten derart gewählt, daß entsprechende Volumenströme vorausgesetzt laminare Strömungsbedingungen vorherrschen.

Insbesondere zur Durchführung heterogen katalysierter Gasphasenreaktionen weist der Reaktionsbereich ein katalytisch aktives Material auf. Dieses kann auf einem Trägermaterial aufgebracht sein oder die den Reaktionsbereich umgebenden Wände können ein katalytisch aktives Material aufweisen, beispielsweise hieraus bestehen oder dieses als Beschichtung aufweisen.

Die Mikroreaktoren können aus einzelnen, entsprechend gebogenen plattenförmigen Teilen, wie Blechen oder Folien, oder aus einem Substrat hergestellt sein, in das entsprechende Strukturen, wie Kanäle und Hohlräume eingebracht sind, die gegebenenfalls mit einer Deckplatte abgeschlossen sind.

Geeignete Herstellungsverfahren sind insbesondere feinwerktechnische und mikrotechnische Verfahren, wie Fräsen, Funkenerodieren, Ablatieren mittels Laserstrahlung, lithographische Verfahren unter Einsatz von Ätztechniken, insbesondere Naßätzen von Edelstählen, oder LIGA-Verfahren. Eine kostengünstige Massenfertigung kann auch mit Abformverfahren, wie Spritzgießen oder Prägen, realisiert werden. Neben Polymeren können hierbei auch präkeramische Verbindungen oder mit organisch gebundene metallische oder/ und keramische Pulver verwendet werden, wozu im Verfahren gegebenenfalls ein Entbinderungsschritt und eine thermische Behandlung erforderlich sind.

Geeignete Materialien für solche Mikroreaktoren werden insbesondere im Hinblick auf die chemische Inertheit bezüglich der Edukte und Produkte, die Temperaturstabilität und Verarbeitbarkeit ausgewählt. Je nach Anwendung kommen daher insbesondere Metalle, Edelstähle, Legierungen, Halbmetalle, wie Silizium, Glas, Keramik oder Polymere, wie Thermoplaste, in Frage.

In solche Mikroreaktoren können weitere funktionelle Einheiten, wie Mischer, Wärmetauscher oder Sensoren, beispielsweise Durchflußmesser, pH-Sonden, Druck- oder Temperaturmesser, integriert werden.

Ausführungsbeispiele des erfindungsgemäßen Mikroreaktors werden anhand der folgenden schematischen Zeichnungen näher erläutert. Es zeigen:
- Fig. 1a: einen Mikroreaktor mit spiralartiger Anordnung der Zu- und der Abführung im Querschnitt von oben,
- Fig. 1b: den Mikroreaktor nach Fig. 1a im Querschnitt von der Seite,
- Fig. 2: einen Mikroreaktor mit spiralartiger Anordnung zweier Zuführungen und einer Abführung im Querschnitt von oben,
- Fig. 3a: einen Mikroreaktor mit einem in als Zu- bzw. Abführung dienende Sektoren aufgeteilten kreisringförmigen Raum im Querschnitt von oben,
- Fig. 3b: den Mikroreaktor nach Fig. 3a im Querschnitt von der Seite,
- Fig. 4a: einen Mikroreaktor mit radial angeordneten, als Gegenstromrohre ausgebildeten Gegenstrom-Reaktoreinheiten im Querschnitt von oben,
- Fig. 4b: den Mikroreaktor nach Fig. 4a im Querschnitt von der Seite,
- Fig. 5a: einen Mikroreaktor mit radial angeordneten, aus plattenförmigen Elementen gebildeten Gegenstrom-Reaktoreinheiten im Querschnitt von oben,
- Fig. 5b: den Mikroreaktor nach Figur 5a im Querschnitt von der Seite,
- Fig. 5c: den Mikroreaktor nach Fig. 5a und 5b in perspektivischer Darstellung, geschnitten von oben sowie teilweise von der Seite.

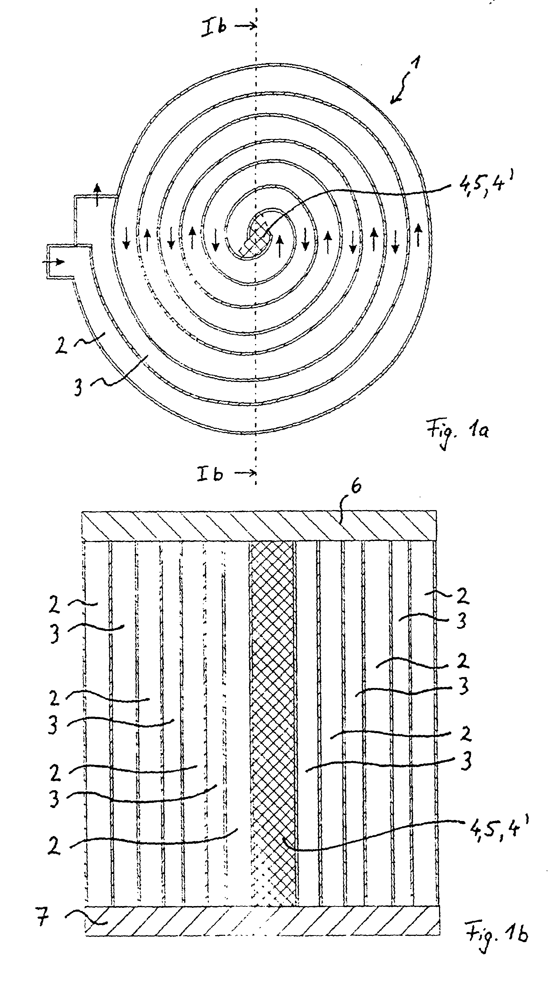

In Figur 1a ist ein Mikroreaktor 1 mit spiralartiger Anordnung der Zuführung 2 und der Abführung 3 im Querschnitt von oben schematisch dargestellt. Die Zuführung 2 und die Abführung 3 sind in einer Ebene in der Art einer Doppelspirale benachbart geführt und beide mit dem im gemeinsamen zentralen Bereich 4' liegenden Reaktionsbereich 4 verbunden. Die Pfeile deuten die Strömungsrichtung des Edukt- bzw. Produktstromes innerhalb des Mikroreaktors 1 an. Bis auf die äußere Windung ist die Zuführung 2 in der gezeigten Ebene von der Abführung 3 umgeben. Dadurch, daß der Reaktionsbereich 4 in der gezeigten Ebene von der Zu- und Abführung 2, 3 umgeben ist, sind in dieser Ebene Wärmeverluste an die Umgebung stark minimiert. Durch die benachbarte Anordnung und Fluidführung im Gegenstrom wird ein effektiver Wärmeaustausch zwischen dem Produktstrom und dem Eduktstrom ermöglicht. Im Reaktionsbereich 4 befindet sich ein Katalysatormaterial 5.

Die Figur 1b zeigt den Mikroreaktor nach Figur 1a im Querschnitt von der Seite. Deutlich sichtbar ist die benachbarte Anordnung der Zuführung 2 mit der Abführung 3, die beide mit dem Reaktionsbereich 4, hier mit einem Katalysatormaterial 5, verbunden sind. Zur Verminderung von Wärmeverlusten zu den die Zu- und die Abführung an den beiden Stirnflächen abschließenden Deck- und Bodenplatte 6, 7 weisen die Zuführung 2 und die Abführung 3 ein großes Verhältnis zwischen Höhe und Breite auf. Es ist auch denkbar, mehrere solcher Mikroreaktoren aufeinander zu stapeln, wodurch keine Wärmeverluste an den benachbarten abschließenden Elementen auftreten.

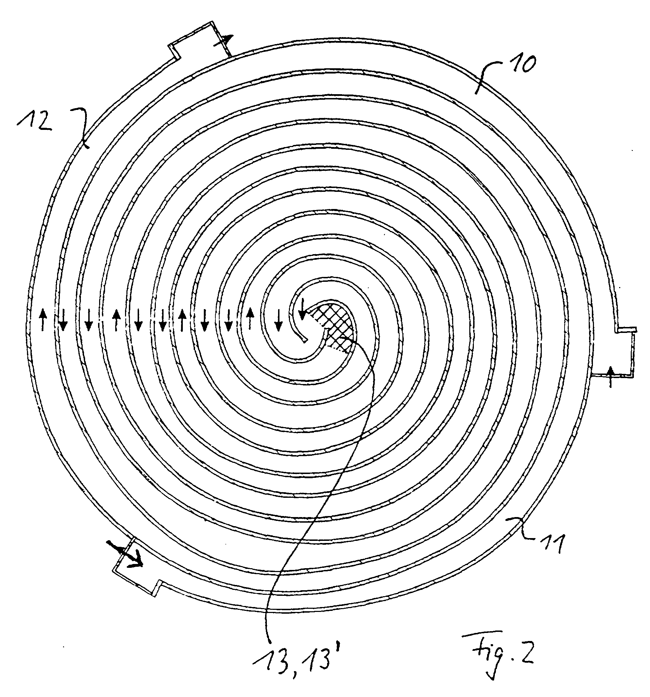

Der Mikroreaktor nach Figur 2 weist zwei Zuführungen 10 und 11 sowie eine Abführung 12 auf, die um den im zentralen Bereich 13' liegenden Reaktionsbereich 13 angeordnet und mit diesem verbunden sind. Es ist auch denkbar, drei oder mehr Zuführungen sowie zwei oder mehr, gegebenenfalls hintereinander angeordnete Reaktionsbereiche vorzusehen.

Solche in den Figuren 1a, 1b und 2 dargestellte Mikroreaktoren können aus spiralförmig gewundenen plattenförmigen Elementen aufgebaut sein, die an den Stirnflächen verschlossen sind, und Anschlüsse für die Zu- und die Abführung aufweisen. Denkbar ist auch, die Wandungen der Zu- und der Abführung sowie eine Bodenplatte einstückig aus einem Substrat, beispielsweise durch Mikrostrukturierung eines Polymers und anschließender galvanischer Abformung oder durch Prägen einer Aluminiumplatte, herzustellen.

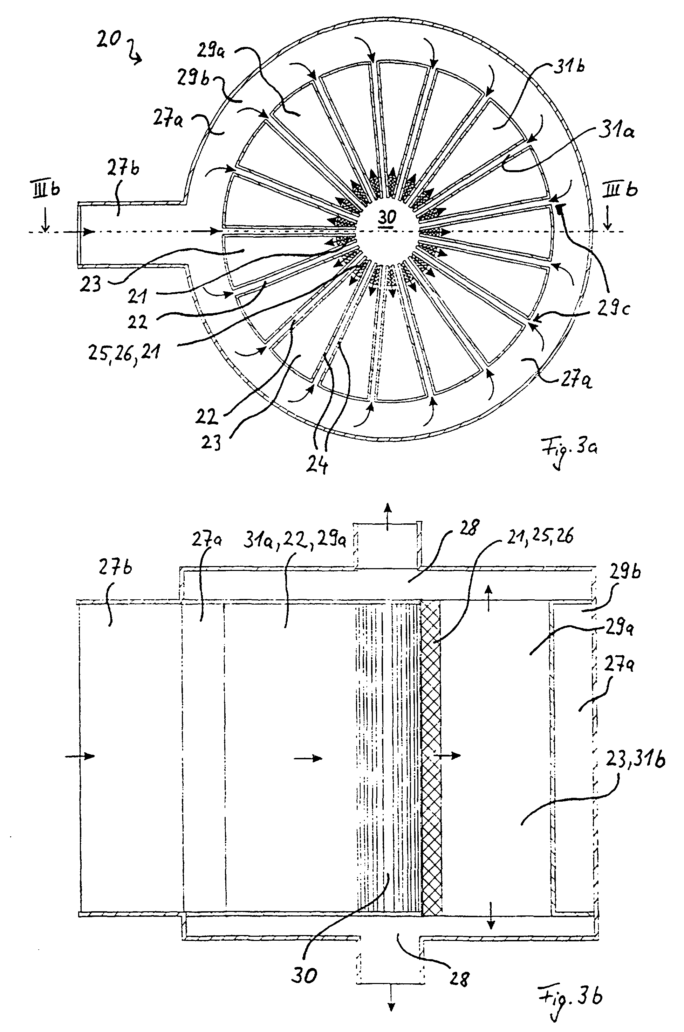

In der Fig. 3a ist ein Mikroreaktor 20 schematisch dargestellt, der einen einen zylindrischen zentralen Bereich 30 umgebenden, in Sektoren 31a, b aufgeteilten und im Querschnitt kreisringförmigen Raum 29a aufweist. Alternierende Sektoren 31a, b, hier jeweils siebzehn, dienen als Zuführung 22 bzw. als Abführung 23. Die als Zuführung 22 dienenden Sektoren 31a sind über den zentralen Bereich 30, der durch einen freien Raum gebildet ist, mit den als Abführung 23 dienenden Sektoren 31b verbunden. In diesem Beispiel dienen die dem zentralen Bereich 30 zugewandten Bereiche der als Abführung 23 dienenden Sektoren 31b als Reaktionsbereiche 21. Der kreisringförmige Raum 29a weist eine Vielzahl von Sektoren auf, wodurch ein guter Wärmeaustausch zwischen den im Gegenstrom geführten Produkt- und Eduktströmen, die radial zu bzw. von dem zentralen Bereich 30 strömen, erreicht wird. In diesem Beispiel sind die als Zuführung 22 dienenden Sektoren 31a als Kanäle etwa gleicher Breite ausgebildet, während die als Abführung 23 dienenden Sektoren 31 b einen sich radial nach außen aufweitenden Querschnitt aufweisen. Die die Zu- und Abführungen 22, 23 begrenzenden und die Sektoren 31 a, b bildenden Wände 24 sind vorteilhaft aus einem thermisch gut leitfähigen Material, beispielsweise aus Metallfolien, gebildet. Der kreisringförmige Raum 29a ist von einem äußeren kreisringförmigen Raum 29b umgeben, der als Zuführungsverteiler 27a dient. Hierzu ist dieser mit einer seitlich angeordneten Hauptzuführung 27 b sowie über Schlitze 29c mit den als Zuführung 22 dienenden Sektoren 31a verbunden. Die Strömungsrichtungen der Edukt- und Produktströme sind als Pfeile angedeutet. In diesem Beispiel weisen die Reaktionsbereiche 21 ein auf einen Träger 26 aufgebrachtes katalytisch aktives Material 25 auf. Es kann auch vorteilhaft sein, ein katalytisch aktives Material in dem zentralen Bereich 30 vorzusehen. Um eine Temperaturänderung, beispielsweise beim Starten einer Umsetzung im Mikroreaktor, im zentralen Bereich 30 des Mikroreaktors 20 zu erreichen, kann es vorteilhaft sein, eine Heiz- oder Kühlvorrichtung, beispielsweise einen Wärmetauscher, im zentralen Bereich 30 anzuordnen.

In dem in Figur 3b gezeigten seitlichen Querschnitt des Mikroreaktors 20 nach Figur 3a ist ebenfalls der Verlauf der Edukt- und der Produktströme anhand von Pfeilen angedeutet. Zu erkennen ist ein Reaktionsbereich 21 mit einem auf dem Träger 26 aufgebrachten katalytischen Material 25, der über die Zuführung 22, den Zuführungsverteiler 27a mit der seitlichen Hauptzuführung 27b sowie über die Abführung 23 mit den Hauptabführungen 28 verbunden ist. Die Hauptabführungen 28 sind an beiden Stirnseiten des Mikroreaktors 20 oberhalb und unterhalb sowohl des zentralen Bereichs 30, des in Sektoren aufgeteilen kreisringförmigen Raumes 29a als auch des äußeren kreisringförmigen Raumes 29b angeordnet und axial mit den als Abführung 23 dienenden Sektoren 31b verbunden.

In der Figur 4a ist ein Mikroreaktor 40 im Querschnitt von oben dargestellt, der in der gezeigten Ebene fünf Gegenstrom-Reaktoreinheiten 41 aufweist. Jede Mikroreaktoreinheit 41 umfaßt eine von einem inneren Rohr 44 gebildete Zuführung 43, die in der gezeigten Ebene von der der als äußeren Rohr 42 ausgebildeten Abführung 45 umgeben ist und über den an dem verschlossenen Ende des äußeren Rohres 42 gelegenen Reaktionsbereich 46 mit dieser verbunden ist. Die einzelnen Gegenstrom-Reaktoreinheiten 41 sind derart radial angeordnet, daß die fluidisch nicht miteinander verbundenen Reaktionsbereiche 46 im zentralen Bereich 46' benachbart liegen. In diesem Beispiel ist der Bereich 46' zwischen den Gegenstrom-Reaktoreinheiten 41 leer, wodurch eine Wärmeübertragung an benachbarte Gegenstrom-Reaktoreinheiten überwiegend durch Wärmestrahlung erfolgt. Durch die benachbarte Anordnung der Reaktionsbereiche 46 ist eine Wärmeübertragung an die Umgebung minimiert. Es ist auch denkbar, den freien Bereich 46' zum Durchleiten eines Wärmetausch-Mediums, beispielsweise in der Startphase einer Reaktion, zur Temperaturregelung oder um überschüssige Wärme abzuführen, zu nutzen. Die Abführungen 45 der Gegenstrom-Reaktoreinheiten 41 sind mit einem als kreisringförmigen Raum 49b ausgebildeten Abführungssammler 49a verbunden. Die Zuführungen 43 beginnen in einem gemeinsamen Zuführungsverteiler 47a, der als zweiter äußerer kreisringförmiger Raum 47b den Abführungssammler 49a umgibt.

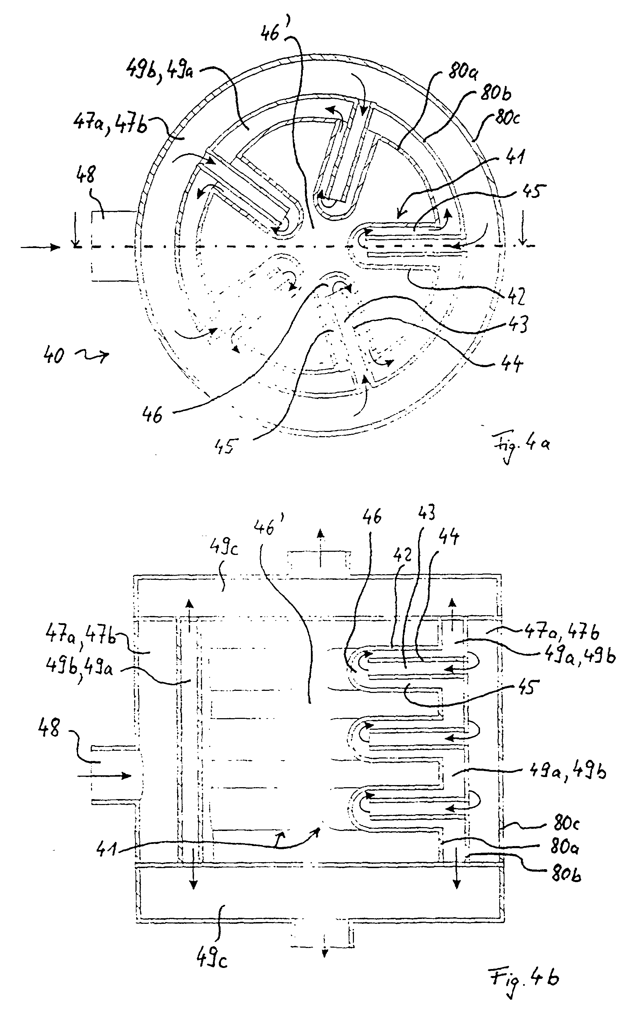

In Figur 4b ist der Mikroreaktor 40 nach Figur 4a im Querschnitt von der Seite gezeigt. Die Gegenstrom-Reaktoreinheiten 41 umfassen jeweils ein äußeres Rohr 42 und ein koaxial angeordnetes inneres Rohr 44, wobei beide Rohre einen runden Querschnitt aufweisen. Das äußere Rohr 42 ist an einem Ende halbkugelförmig verschlossen. Das innere Rohr 44 bildet die Zuführung 43, die von der Abführung 45 umgeben ist. Im Übergangsbereich zwischen der Zuführung 43 und der Abführung 45, bevorzugt im Bereich des verschlossenen Endes des äußeren Rohres 42, befindet sich der Reaktionsbereich 46. Die Gegenstrom-Reaktoreinheiten 41 sind im Innern des kreisringförmig ausgebildeten Abführungssammlers 49a radial in drei Ebenen um den zylindrischen zentralen Bereich 46' angeordnet. Der Abführungssammler 49a verbindet die einzelnen Abführungen 45 mit den Hauptabführungen 49c, die an beiden Stirnflächen des zylindrischen Mikroreaktors 40 angeordnet sind. Der als zweiter äußerer kreisringförmiger Raum 47b ausgebildete Zuführungsverteiler 47 verbindet die Hauptzuführung 48 mit den einzelnen Zuführungen 43. Die Mikroreaktoreinheiten 41 sind derart radial um den zentralen Bereich 46' angeordnet, daß die Reaktionsbereiche 46 benachbart sind. Aufgrund stark verringerter Wärmestrahlungverluste an die Umgebung ist sowohl eine effektive Konzentrierung als auch eine Homogenisierung der Reaktionswärme im zentralen Bereich 46' des Mikroreaktors 40 möglich. Ein großer Teil der im Produktstrom enthaltenen Reaktionswärme kann im Bereich der Zuführungen 43 und des Zuführungsverteilers 47 an den Eduktstrom abgegeben werden.

Der Mikroreaktor 40 kann aus drei koaxial ineinander liegenden Hohlzylindern 80a, b, c, beispielsweise aus Metallfolie, aufgebaut sein. Die äußeren Rohre 42 der Gegenstrom-Reaktoreinheiten 41 stellen dabei Ausstülpungen des innersten Hohlzylinders 80a dar. Die mit dem mittleren Hohlzylinder 80b verbundenen inneren Rohre 44 der Gegenstrom-Reaktoreinheiten stehen nicht in Kontakt mit den sie umgebenden äußeren Rohren 42, so daß auf Grund dieser freien Beweglichkeit auch große Temperaturdifferenzen nicht zu inneren Spannungen der Hohlzylinderanordnung 80a, b, c führen.

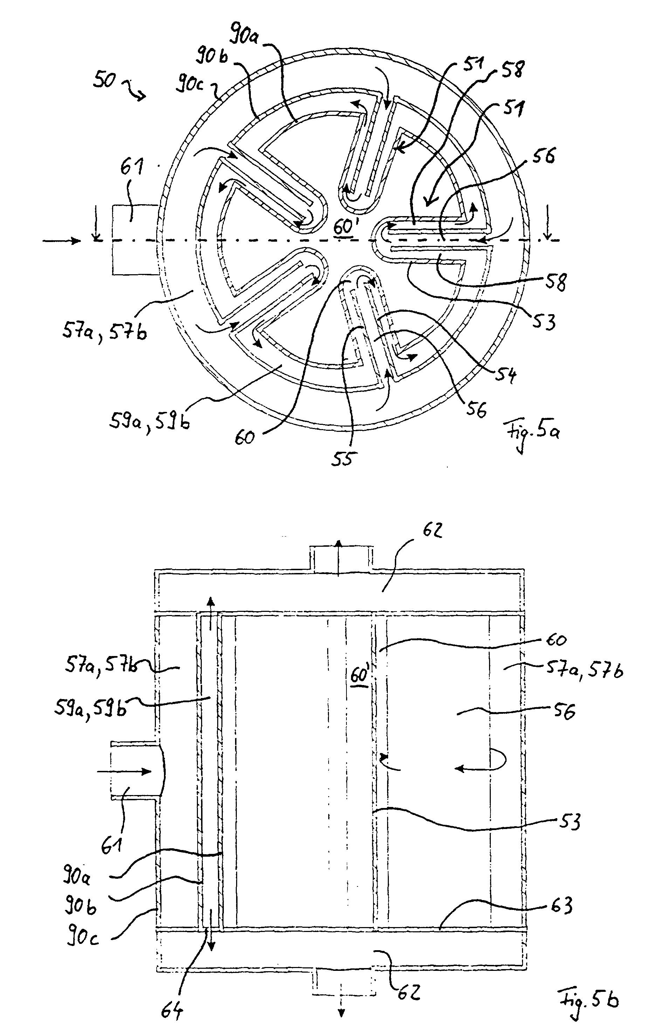

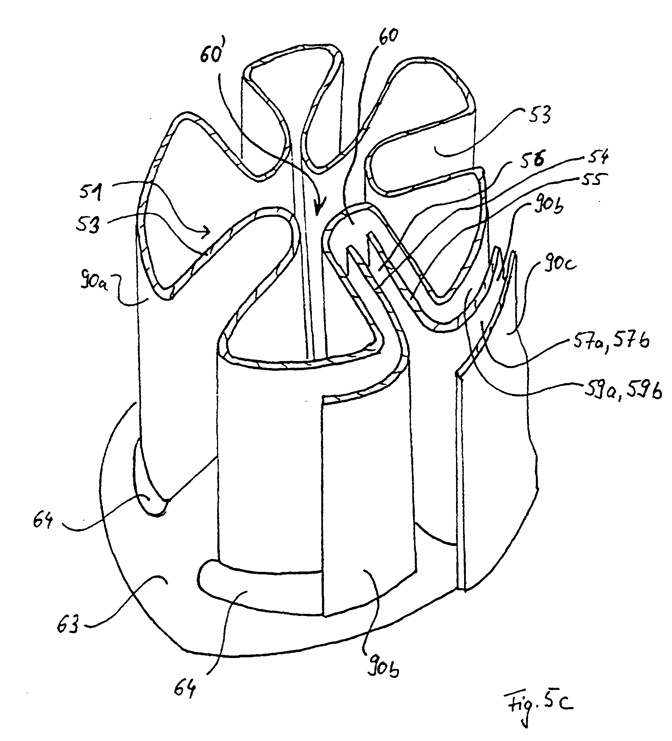

Der in den Fig. 5a, 5b und 5c schematisch dargestellte Mikroreaktor 50 weist fünf Gegenstrom-Reaktoreinheiten 51 auf, die einen zentralen Bereich 60' derart umgeben, daß die Reaktionsbereiche 60 der einzelnen Gegenstrom-Reaktoreinheiten 51 benachbart zueinander im zentralen Bereich 60' liegen. Jede Gegenstrom-Reaktoreinheit 51 weist eine Zuführung 56 auf, die in der in Fig. 5a gezeigten Ebene von der Abführung 58 umgeben ist, wobei der Verbindungsbereich zwischen der Zu- und Abführung den Reaktionsbereich 60 bildet. Die von den Zuführungen 56 und den Abführungen 58 geführten Eduktbzw. Produktströme, deren Verlauf hier mit Pfeilen angedeutet ist, laufen radial zu bzw. von den im zentralen Bereich 60' gelegenen Reaktionsbereichen 60. Die Gegenstrom-Reaktoreinheiten 51 sind von einem als Abführungssammler 59a dienenden kreisringförmigen Raum 59b umgeben, der mit den Abführungen 58 verbunden ist. Der Abführungssammler 59a wiederum ist von einem als zweiten äußeren kreisringförmigen Raum 57b ausgebildeten Zuführungsverteiler 57a umgeben, der von einer seitlich am Mikroreaktor 50 angeordneten Hauptzuführung 61 den Eduktstrom auf die einzelnen Zuführungen 56 verteilt. Oberhalb und unterhalb des zylindrischen Mikroreaktors 50 befindet sich eine Hauptabführung 62, die die Produkte axial aus dem Abführungssammler 59a abführt.

Jede Zuführung 56 einer Gegenstrom-Reaktoreinheit 51 wird durch zwei zueinander beabstandet angeordnete plattenförmige Elemente 54, 55 gebildet. Diese sind von einem U-förmigen plattenförmigen Element 53 derart umgeben, daß in den beiden Zwischenräumen zwischen den Elementen 54 bzw. 55 und dem U-förmigen Element 53 jeweils ein Kanal gebildet wird, der als Abführung 58 dient. Der Übergangsbereich zwischen der Zuführung 56 und den beiden Abführungen 58, insbesondere der Bereich der Biegung des U-förmigen Elementes 53, dient als Reaktionsbereich 60. Insbesondere aus Fig. 5c wird deutlich, daß in diesem Ausführungsbeispiel die U-förmigen Elemente 53 der fünf Gegenstrom-Reaktoreinheiten 51 aus einem einzigen entsprechend geformten plattenförmigen Element gebildet sind, das einen Hohlzylinder 90a mit U-förmigen Ausstülpungen darstellt. Jeweils zwei eine Wand einer Zuführung 56 bildende plattenförmige Elemente 54 zweier benachbarter Gegenstrom-Reaktoreinheiten 51 sind aus einem plattenförmigen Element gebildet. Diese plattenförmigen Elemente bilden auch die als mittlerer Hohlzylinder 90b bezeichnete Wand zwischen dem als Abführungssammler 59a dienenden kreisringförmigen Raum 59b und dem zweiten äußeren kreisförmigen Raum 57b, der als Zuführungsverteiler 57a dient. Der äußere Hohlzylinder 90c bildet die äußere Wand des Zuführungsverteilers 57a. Wie aus Fig. 5c ersichtlich, sind die Hohlzylinder 90a, b, c mit einer Bodenplatte 63 verbunden, die zur Ableitung der Produktströme vom Abführungssammler 59a in die Hauptabführung 62 Öffnungen 64 aufweist. Entsprechend ist die Verbindung durch eine hier nicht dargestellte Deckplatte zu der oberhalb angeordneten Hauptabführung 62 ausgebildet. Dieser kompakte Mikroreaktor 50 besteht aus wenigen, einfach herzustellenden Elementen und ist damit als kostengünstiges Massenprodukt in vielen Bereichen, beispielsweise in der Brennstoffzellentechnik oder/ und Kraftfahrzeugtechnik, einsetzbar.

Die Mikroreaktoren weisen eine äußerst kompakte Bauweise auf, bei der die Reaktionsbereiche in mindestens einer Ebene von Edukt- bzw. Produktströmen umgeben sind. Durch die Gegenstromführung wird von den Reaktionsbereichen abgegebene Wärme diesen wieder zugeführt, so daß gegenüber bekannten Mikroreaktoren deutlich höhere Reaktionstemperaturen erreicht werden können. Damit eröffnen diese Mikroreaktoren ein weiteres bisher für Mikroreaktoren nicht in Frage kommendes Spektrum insbesondere an chemischen Umsetzungen bei hohen Temperaturen.

### Bezugszeichenliste

- 1: Mikroreaktor
- 2: Zuführung
- 3: Abführung
- 4: Reaktionsbereich
- 4': zentraler Bereich
- 5: Katalysatormaterial
- 6: Deckplatte
- 7: Bodenplatte
- 10: Zuführung
- 11: Zuführung
- 12: Abführung
- 13: Reaktionsbereich
- 13': zentraler Bereich
- 20: Mikroreaktor
- 21: Reaktionsbereich
- 22: Zuführung
- 23: Abführung
- 24: Wand
- 25: Katalysatormaterial
- 26: Katalysatorträger
- 27a: Zuführungsverteiler
- 27b: Hauptzuführung
- 28: Hauptabführung
- 29a: kreisringförmiger Raum
- 29b: äußerer kreisringförmiger Raum
- 29c: Schlitz
- 30: zylindrischer zentraler Bereich
- 31a,b: Sektor
- 40: Mikroreaktor
- 41: Gegenstrom-Reaktoreinheit
- 42: äußeres Rohr
- 43: Zuführung
- 44: inneres Rohr
- 45: Abführung
- 46: Reaktionsbereich
- 46': zentraler Bereich
- 47a: Zuführungsverteiler
- 47b: zweiter äußerer kreisringförmiger Raum
- 48: Hauptzuführung
- 49a: Abführungssammler
- 49b: äußerer kreisringtörmiger Raum
- 49c: Hauptabführung
- 50: Mikroreaktor
- 51: Gegenstrom-Reaktoreinheit
- 53: U-förmig gebogenes plattenförmiges Element
- 54: plattenförmiges Element
- 55: plattenförmiges Element
- 56: Zuführung
- 57a: Zuführungsverteiler
- 57b: zweiter äußerer kreisringförmiger Raum
- 58: Abführung
- 59a: Abführungssammler
- 59b: äußerer kreisringförmiger Raum
- 60: Reaktionsbereich
- 60': zentraler Bereich
- 61: Hauptzuführung
- 62: Hauptabführung
- 63: Bodenplatte
- 64: Öffnung
- 80a,b,c: Hohlzylinder
- 90a,b,c: Hohlzylinder

## Patentansprüche

1. Verfahren zur Durchführung chemischer Umsetzungen in einem Mikroreaktor, bei dem ein oder mehrere Eduktströme zu mindestens einem Reaktionsbereich geführt werden, und bei dem ein oder mehrere Produktströme vom Reaktionsbereich im Gegenstrom zu dem bzw. den Eduktströmen und in thermischem Kontakt mit diesem bzw. diesen geführt werden,
**dadurch gekennzeichnet, daß**
zur Minimierung thermischer Verluste aus dem Reaktionsbereich an die Umgebung der bzw. die Edukt- und Produktströme spiralartig oder radial in mindestens einer Ebene zu bzw. von dem in einem zentralen Bereich des Mikroreaktors angeordneten Reaktionsbereich geführt werden.

2. Verfahren nach Anspruch 1, **dadurch gekennzeichnet, daß** mehrere Edukt- und Produktströme jeweils in alternierenden Sektoren eines einen zylindrischen zentralen Bereich umgebenden, im Querschnitt kreisringförmigen Raumes radial zu bzw. von dem zentralen Bereich geführt werden, wobei der zentrale Bereich und/ oder Bereiche der Sektoren als Reaktionsbereich dient bzw. dienen.

3. Verfahren nach Anspruch 1, **dadurch gekennzeichnet, daß** mehrere Edukt- und Produktströme radial zu bzw. von mehreren fluidisch voneinander getrennten und in einem zentralen Bereich des Mikroreaktors und benachbart zueinander liegenden Reaktionsbereichen geführt werden,
wobei jeweils mindestens ein Edukt- und Produktstrom in einer Gegenstrom-Reaktoreinheit geführt werden, die jeweils mindestens einen Reaktionsbereich aufweist.

4. Verfahren nach Anspruch 3, **dadurch gekennzeichnet, daß** um die Gegenstrom-Reaktoreinheiten ein Wärmetausch-Medium geleitet wird.

5. Verfahren nach einem der Ansprüche 2 bis 4, **dadurch gekennzeichnet, daß** die Eduktströme und/ oder die Produktströme über einen äußeren kreisringförmigen Raum zu- bzw. abgeführt werden.

6. Verfahren nach einem der Ansprüche 1 bis 5, **dadurch gekennzeichnet, daß** der bzw. die Edukt- und/ oder Produktströme in Kanälen mit einer Breite in mindestens einem Bereich von < 2 mm geführt werden.

7. Mikroreaktor (1; 20; 40; 50) zur Durchführung chemischer Umsetzungen mit einer oder mehreren Zuführungen (2; 10, 11; 22; 43; 56) für Edukte und einer oder mehreren Abführungen (3; 12; 23; 45; 58) für Produkte sowie mindestens einem mit der bzw. den Zu- und Abführungen (2, 3; 10, 11, 12; 22, 23; 43, 45; 56, 58) verbundenen Reaktionsbereich (4; 13; 21; 46; 60), wobei die Abführungen im Gegenstrom zu der bzw. den Zuführungen und in thermischem Kontakt mit dieser bzw. diesen angeordnet sind,
**dadurch gekennzeichnet, daß**
zur Minimierung thermischer Verluste aus dem Reaktionsbereich (4; 13; 21; 46; 60) an die Umgebung die Zuführung (2) und Abführung (3; 12) bzw. die Zuführungen (10, 11; 22; 43; 56) und Abführungen (23; 45; 58) spiralartig oder radial in mindestens einer Ebene um den in einem zentralen Bereich (4'; 13'; 30; 46'; 60') des Mikroreaktors (1; 20; 40; 50) liegenden Reaktionsbereich (4; 13; 21; 46; 60) angeordnet sind.

8. Mikroreaktor (20) nach Anspruch 7, **gekennzeichnet durch** einen zylindrischen zentralen Bereich (30), einen diesen umgebenden, in Sektoren (31a,b) aufgeteilten und im Querschnitt kreisringförmigen Raum (29a),
wobei alternierende Sektoren (31a,b) des kreisringförmigen Raumes als Zu- bzw. Abführung (22, 23) dienen,
wobei die als Zuführung (22) dienenden Sektoren (31a) über den zentralen Bereich jeweils mit den als Abführung (23) dienenden Sektoren (31b) verbunden sind, und
wobei der zentrale Bereich (30) und/ oder Bereiche der Sektoren (31a,b) als Reaktionsbereich (21) dient bzw. dienen.

9. Mikroreaktor (40; 50) nach Anspruch 7, **dadurch gekennzeichnet, daß** mehrere Zu- und Abführungen (43, 45; 56, 58) radial in mindestens einer Ebene um mehrere fluidisch voneinander getrennte und in einem zentralen Bereich (46'; 60') des Mikroreaktors (40; 50) benachbart zueinander liegende Reaktionsbereiche (46; 60) angeordnet sind, wobei jeweils mindestens eine Zuführung (43; 56) und Abführung (45; 58) sowie mindestens ein Reaktionsbereich (46; 60) in einer Gegenstrom-Reaktoreinheit (41; 51) enthalten sind.

10. Mikroreaktor (40) nach Anspruch 9, **dadurch gekennzeichnet, daß** die Gegenstrom-Reaktoreinheiten (41) jeweils ein Gegenstromrohr, umfassend ein äußeres an einem Ende verschlossenes Rohr (42) und ein koaxial zum äußeren Rohr beabstandetes inneres Rohr (44), aufweisen, wobei das innere Rohr (44) als Zu- oder Abführung (43) und der Bereich zwischen dem äußeren und dem inneren Rohr als Ab- bzw. Zuführung (45) dient, und wobei der Übergangsbereich zwischen der Zu- und der Abführung im Bereich des verschlossenen Endes des äußeren Rohrs als Reaktionsbereich (46) dient.

11. Mikroreaktor nach Anspruch 9 oder 10, **dadurch gekennzeichnet, daß** die Gegenstrom-Reaktoreinheiten in zwei oder mehr Ebenen radial um einen zylindrischen zentralen Bereich angeordnet sind.

12. Mikroreaktor nach Anspruch 9 oder 10, **dadurch gekennzeichnet, daß** die Gegenstrom-Reaktoreinheiten im Raum radial um einen zentralen kugeiförmigen Bereich angeordnet sind.

13. Mikroreaktor (50) nach Anspruch 9, **dadurch gekennzeichnet, daß** die Gegenstrom-Reaktoreinheiten (51) jeweils zwei zueinander beabstandet angeordnete, einen als Zu- oder Abführung (56) dienenden Kanal bildende plattenförmige Elemente (54, 55) sowie ein die beiden plattenförmigen Elemente U-förmig umgebendes und mit diesen jeweils einen als Ab- bzw. Zuführung (58) dienenden Kanal bildendes plattenförmiges Element (53) aufweisen, wobei der Übergangsbereich zwischen der Zu- und der Abführung im Bereich der Biegung des U-förmigen Elementes als Reaktionsbereich (60) dient.

14. Mikroreaktor nach einem der Ansprüche 9 bis 13, **dadurch gekennzeichnet, daß** der die Gegenstrom-Reaktoreinheiten aufweisende zentrale Bereich zum Durchleiten eines Wärmetausch-Mediums ausgebildet ist.

15. Mikroreaktor (20; 40; 50) nach einem der Ansprüche 8 bis 14, **dadurch gekennzeichnet, daß** die Sektoren (31a,b) oder die Gegenstrom-Reaktoreinheiten (41; 51) von einem als Abführungssammter (49a, 59a) oder Zuführungsverteiler (27a) dienenden äußeren im Querschnitt kreisringförmigen Raum (29b; 49b; 59b) umgeben sind, der mit den Abführungen (45; 58) bzw. den Zuführungen (22) in radialer Richtung verbunden ist.

16. Mikroreaktor (40; 50) nach Anspruch 15, **dadurch gekennzeichnet, daß** der äußere, als Abführungssammler (49a; 59a) oder Zuführungsverteiler dienende kreisringförmige Raum (49b; 59b) von einem zweiten äußeren, als Zuführungsverteiler (47a; 57a) bzw. Abführungssammler dienenden im Querschnitt kreisringförmigen Raum (47b; 57b) umgeben ist, der mit den Zuführungen (43; 56) bzw. den Abführungen in radialer Richtung verbunden ist.

17. Mikroreaktor (20; 40; 50) nach Anspruch 8 bis 16, **gekennzeichnet durch** eine oberhalb oder/ und unterhalb des in Sektoren aufgeteilten kreisringförmigen Raumes (29a) oder/ und des ersten oder/ und zweiten äußeren kreisringförmigen Raumes (29b; 49b, 47b; 59b, 57b) angeordnete Hauptabführung (28; 49c; 62) oder Hauptzuführung, die hierzu mit den als Abführung (23) bzw. Zuführung dienenden Sektoren (31b) bzw. dem Abführungssammler (49a; 59a) bzw. dem Zuführungsverteiler in axialer Richtung verbunden ist.

18. Mikroreaktor nach einem der Ansprüche 7 bis 17, **dadurch gekennzeichnet, daß** die Zu- und/ oder Abführungen als Kanäle in mindestens einem Bereich mit einer Breite von < 2 mm ausgebildet sind.

19. Mikroreaktor nach einem der Ansprüche 7 bis 18, **gekennzeichnet durch** gegebenenfalls auf einen Träger aufgebrachtes katalytisch aktives Material im Reaktionsbereich.

## Claims

1. A method of carrying out chemical reactions in a microreactor, in which one or more educt streams are guided to at least one reaction region and in which one or more product streams are guided from the reaction region in counterflow relationship with the educt stream or streams and in thermal contact therewith, **characterised in that** to minimise heat losses from the reaction region to the surrounding area the educt stream or streams and the product stream or streams are guided spirally or radially in at least one plane respectively to or from the reaction region arranged in a central region of the microreactor.

2. A method as set forth in claim 1 **characterised in that** a plurality of educt and product streams are respectively guided radially to and from the central region in alternate sectors of a space which is of an annular configuration in cross-section and which surrounds a cylindrical central region, wherein the central region and/or regions of the sectors serves or serve as the reaction region.

3. A method as set forth in claim 1 **characterised in that** a plurality of educt and product streams are guided radially respectively to and from a plurality of reaction regions which are fluidically separated from each other and which are disposed in mutually adjacent relationship and in a central region of the microreactor, wherein in each case at least one educt and product stream are guided in a counterflow reactor unit which has at least one respective reaction region.

4. A method as set forth in claim 3 **characterised in that** a heat exchange medium is passed around the counterflow reactor units.

5. A method as set forth in one of claims 2 through 4 **characterised in that** the educt streams and/or the product streams are fed and discharged respectively by way of an outer space of an annular configuration.

6. A method as set forth in one of claims 1 through 5 **characterised in that** the educt stream or streams and/or the product stream or streams are guided in passages of a width in at least one region of < 2 mm.

7. A microreactor (1; 20; 40; 50) for carrying out chemical reactions comprising one or more feed means (2; 10, 11; 22; 43; 56) for educts and one or more discharge means (3; 12; 23; 45; 58) for products and at least one reaction region (4; 13; 21; 46; 60) connected to the feed and discharge means (2, 3; 10, 11, 12; 22, 23; 43, 45; 56, 58), wherein the discharge means are arranged in counterflow relationship with the one or more feed means and are in thermal contact therewith, **characterised in that** to minimise heat losses from the reaction region (4; 13; 21; 46; 60) to the surrounding area the feed means (2) and the discharge means (3; 12) or the plurality of feed means (10, 11; 22; 43; 56) and the plurality of discharge means (23; 45; 58) are arranged spirally or radially in at least one plane around the reaction region (4; 13; 21; 46; 60) which is in a central region (4'; 13'; 30; 46'; 60') of the microreactor (1; 20; 40; 50).

8. A microreactor (20) as set forth in claim 7 **characterised by** a cylindrical central region (30) and a space (29a) which is of an annular configuration in cross-section and which surrounds it and which is divided into sectors (31a, b),
wherein alternate sectors (31a, b) of the space of an annular configuration serve as feed and discharge means (22, 23) respectively,
wherein the sectors (31a) serving as a feed means (22) are connected by way of the central region to the respective sectors (31b) serving as a discharge means (23), and
wherein the central region (30) and/or regions of the sectors (31a, b) serves or serve as a reaction region (21).

9. A microreactor (40; 50) as set forth in claim 7 **characterised in that** a plurality of feed and discharge means (43, 45; 56, 58) are arranged radially in at least one plane around a plurality of reaction regions (46; 60) which are fluidically separated from each other and which are disposed in mutually adjacent relationship in a central region (46'; 60') of the microreactor (40; 50), wherein at least one respective feed means (43; 56) and discharge means (45; 58) and at least one reaction region (46; 60) are contained in a counterflow reactor unit (41; 51).

10. A microreactor (40) as set forth in claim 9 **characterised in that** the counterflow reactor units (41) each have a counterflow tube including an outer tube (42) closed at one end and an inner tube (44) spaced coaxially in relation to the outer tube, wherein the inner tube (44) serves as a feed or discharge means (43) and the region between the outer and the inner tube serves as a discharge or feed means (45) respectively, and wherein the transitional region between the feed and the discharge means in the region of the closed end of the outer tube serves as a reaction region (46).

11. A microreactor as set forth in claim 9 or claim 10 **characterised in that** the counterflow reactor units are arranged in two or more planes radially around a cylindrical central region.

12. A microreactor as set forth in claim 9 or claim 10 **characterised in that** the counterflow reactor units are arranged in the space radially around the central spherical region.

13. A microreactor (50) as set forth in claim 9 **characterised in that** the counterflow reactor units (51) each have two mutually spaced plate-shaped elements (54, 55) forming a passage serving as a feed or discharge means (56), and a plate-shaped element (53) which surrounds the two plate-shaped elements in a U-shape and which forms therewith a respective passage serving as a discharge or feed means (58), wherein the transitional region between the feed and the discharge means in the region of the bend of the U-shaped element serves as a reaction region (60).

14. A microreactor as set forth in one of claims 9 through 13 **characterised in that** the central region having the counterflow reactor units is adapted for a heat exchange medium to pass therethrough.

15. A microreactor (20; 40; 50) as set forth in one of claims 8 through 14 **characterised in that** the sectors (31a, b) or the counterflow reactor units (41; 51) are surrounded by an outer space (29b; 49b; 59b) which is of an annular configuration in cross-section and which serves as a discharge collector (49a, 59a) or feed distributor (27a) and which is connected in the radial direction to the discharge means (45; 58) and the feed means (22) respectively.

16. A microreactor (40; 50) as set forth in claim 15 **characterised in that** the outer space (49b; 59b) which is of an annular configuration and which serves as a discharge collector (49a; 59a) or feed distributor is surrounded by a second outer space (47b; 57b) which is of an annular configuration in cross-section and which serves as a feed distributor (47a; 57a) or discharge collector respectively and which is connected in the radial direction to the feed means (43; 56) and the discharge means respectively.

17. A microreactor (20; 40; 50) as set forth in claims 8 through 16 **characterised by** a main discharge means (28; 49c; 62) or main feed means which is arranged above and/or below the space (29a) which is of an annular configuration and which is divided into sectors and/or the first and/or second outer space (29b; 49b, 47b; 59b, 57b) which is of an annular configuration and which for that purpose is connected in the axial direction to the sectors (31b) serving as the discharge means (23) or feed means respectively or the discharge collector (49a; 59a) or the feed distributor respectively.

18. A microreactor as set forth in one of claims 7 through 17 **characterised in that** the feed and/or discharge means are in the form of passages in at least one region of a width of < 2 mm.

19. A microreactor as set forth in one of claims 7 through 18 **characterised by** catalytically active material which is possibly applied to a carrier, in the reaction region.

## Revendications

1. Procédé pour réaliser des transformations chimiques dans un microréacteur, dans lequel un ou plusieurs flux d'éduit circulent vers au moins une zone de réaction, et dans lequel un ou plusieurs flux de produit circulent depuis la zone de réaction en sens inverse à celui du ou des flux d'éduit et en contact thermique avec celui-ci ou ceux-ci, **caractérisé en ce que** le ou les flux d'éduit et de produit circulent radialement ou en spirale dans au moins un plan vers ou depuis la zone de réaction agencée dans une région centrale du microréacteur en vue de minimiser les pertes thermiques de la zone de réaction dans l'environnement.

2. Procédé selon la revendication 1, **caractérisé en ce que** plusieurs flux d'éduit et de produit circulent respectivement dans des secteurs agencés en alternance d'une région de forme annulaire en coupe transversale entourant une centrale cylindrique radialement vers ou depuis la région centrale, la région centrale ou des régions des secteurs servant de zone de réaction.

3. Procédé selon la revendication 1, **caractérisé en ce que** plusieurs flux d'éduit ou de produit circulent radialement vers ou depuis plusieurs zones de réaction séparées les unes des autres du point de vue fluidique et adjacentes les unes aux autres dans une région centrale, au moins un flux d'éduit et de produit circulant à chaque fois dans une unité de réacteur à contre-courant qui comporte à chaque fois au moins une zone de réaction.

4. Procédé selon la revendication 3, **caractérisé en ce qu'**un milieu d'échange de chaleur est dirigé autour des unités de réacteur à contre-courant.

5. Procédé selon l'une des revendications 2 à 4, **caractérisé en ce que** les flux d'éduit et/ou les flux de produit sont amenés ou emmenés par un espace extérieur de forme annulaire.

6. Procédé selon l'une des revendications 1 à 5, **caractérisé en ce que** le ou les flux d'éduit et/ou de produit circulent dans des canaux d'une largeur inférieure à au moins 2 mm.

7. Microréacteur (1 ; 20 ; 40 ; 50) pour réaliser des transformations chimiques comportant un ou plusieurs éléments d'amenée (2 ; 10, 11 ; 22 ; 43 ; 56) pour les éduits et un ou plusieurs éléments d'évacuation (3 ; 12 ; 23 ; 45 ; 58) pour les produits ainsi qu'au moins une zone de réaction (4 ; 13 ; 21 ; 46 ; 60) reliée à l'élément ou aux éléments d'amenée et d'évacuation (2, 3 ; 10, 11, 12 ; 22, 23 ; 43, 45 ; 56, 58), les éléments d'évacuation étant agencés à contre-courant par rapport à l'élément ou aux éléments d'amenée et en contact thermique avec celui-ci ou ceux-ci, **caractérisé en ce que** l'élément d'amenée (2) et l'élément d'évacuation (3 ; 12) ou les éléments d'amenée (10, 11 ; 22 ; 43 ; 56) et les éléments d'évacuation (23 ; 45 ; 58) sont agencés radialement ou en spirale dans au moins un plan autour de la zone de réaction (4 ; 13 ; 21 ; 46 ; 60) se trouvant dans une région centrale (4' ; 13'; 30 ; 46' ; 60') du microréacteur (1 ; 20 ; 40 ; 50) en vue de minimiser les pertes thermiques de la zone de réaction (4 ; 13 ; 21 ; 46 ; 60) dans l'environnement.

8. Microréacteur (20) selon la revendication 7, **caractérisé par** une région centrale cylindrique (30) et par un espace (29a) de forme annulaire en coupe transversale entourant celle-ci et divisé en secteurs (31a, b),
dans lequel des secteurs (31a, b) de l'espace de forme annulaire servent alternativement d'élément d'amenée ou d'évacuation (22, 23),
dans lequel les secteurs (31a) servant d'élément d'amenée (22) sont reliés par les régions centrales respectivement aux secteurs (31b) servant d'élément d'évacuation (23), et
dans lequel la région centrale (30) et/ou des régions des secteurs (31a, b) servent de zone de réaction (21).

9. Microréacteur (40 ; 50) selon la revendication 7 **caractérisé en ce que** plusieurs éléments d'amenée et d'évacuation (43, 45 ; 56, 58) sont agencés radialement dans au moins un plan autour de plusieurs zones de réaction (46 ; 60) séparées les unes des autres du point de vue fluidique et adjacentes les unes aux autres dans une région centrale (46'; 60') du microréacteur (40 ; 50), au moins un élément d'amenée (43 ; 56) et un élément d'évacuation (45 ; 58) ainsi qu'au moins une zone de réaction (46 ; 60) sont contenus à chaque fois dans une unité de réaction à contre-courant (41 ; 51).

10. Microréacteur (40) selon la revendication 9, **caractérisé en ce que** les unités de réacteur à contre-courant (41) comportent tous un tube à contre-courant comprenant un tube extérieur (42) fermé à une extrémité et un tube intérieur (44) distant coaxialement du tube extérieur, le tube intérieur (44) servant d'élément d'amenée ou d'évacuation (43) et la région comprise entre le tube extérieur et le tube intérieur servant d'élément d'évacuation ou d'amenée (45), et la région de transition entre l'élément d'amenée et l'élément d'évacuation au niveau de l'extrémité fermée du tube extérieur servant de zone de réaction (46).

11. Microréacteur selon la revendication 9 ou 10, **caractérisé en ce que** les unités de réaction à contre-courant sont agencées dans deux ou plusieurs plans radialement autour d'une région centrale cylindrique.

12. Microréacteur selon la revendication 9 ou 10, **caractérisé en ce que** les unités de réacteur à contre-courant sont agencées dans l'espace radialement autour d'une région centrale sphérique.

13. Microréacteur (50) selon la revendication 9, **caractérisé en ce que** les unités de réacteur à contre-courant (51) comportent tous deux éléments (54, 55) en forme de panneaux constituant un canal servant d'élément d'amenée ou d'évacuation (56) et agencés à distance l'un de l'autre ainsi qu'un élément (53) en forme de panneau entourant en U les deux éléments en forme de panneaux et constituant à chaque fois avec ceux-ci un canal servant d'élément d'évacuation ou d'amenée (58), la région de transition entre l'élément d'amenée et l'élément d'évacuation au niveau du coude de l'élément en U servant de zone de réaction (60).

14. Microréacteur selon l'une des revendications 9 à 13, **caractérisé en ce que** la région centrale comportant les unités de réacteur à contre-courant est conformée de façon à diriger un milieu d'échange de chaleur.

15. Microréacteur (20 ; 40 ; 50) selon l'une des revendications 8 à 14, **caractérisé en ce que** les secteurs (31a, b) ou les unités de réacteur à contre-courant (41 ; 51) sont entourés par un espace (29b ; 49b ; 59b) extérieur de forme annulaire en coupe transversale servant de collecteur d'évacuation (49a ; 59a) ou de distributeur d'amenée (27a), lequel espace est relié aux éléments d'évacuation (45 ; 58) ou aux éléments d'amenée (22) dans une direction radiale.

16. Microréacteur (40 ; 50) selon la revendication 15, **caractérisé en ce que** l'espace (49b ; 59b) de forme annulaire servant de collecteur d'évacuation (49a ; 59a) ou de distributeur d'amenée est entouré par un second espace extérieur (47b ; 57b) de forme annulaire en coupe transversale servant de distributeur d'amenée (47a ; 57a) ou de collecteur d'évacuation, lequel second espace extérieur est relié aux éléments d'amenée (43 ; 56).ou aux éléments d'évacuation dans une direction radiale.

17. Microréacteur (20 ; 40 ; 50) selon l'une des revendications 8 à 16, **caractérisé en ce qu'**au-dessus et/ou au-dessous de l'espace (29a) de forme annulaire divisé en secteurs et/ou du premier et/ou du second espace annulaire extérieur (29b ; 49b, 47B . 59b, 57b) est agencé un élément d'évacuation principal (28 ; 49c ; 62) ou un élément d'amenée principal qui est relié pour cela aux secteurs (31b) servant d'élément d'évacuation (23) ou d'élément d'amenée ou au collecteur d'évacuation (49a ; 59a) ou au distributeur d'amenée dans une direction axiale.

18. Microréacteur selon l'une des revendications 7 à 17, **caractérisé en ce que** les éléments d'évacuation et/ou d'amenée sont conformés en canaux de largeur inférieur à au moins 2 mm.

19. Microréacteur selon l'une des revendications 7 à 18, **caractérisé par** une matière qui est placée dans la zone de réaction, qui est active du point de vue catalytique et qui est le cas échéant déposée sur un support.
